# EUROPÄISCHE PATENTSCHRIFT

(11) **EP 1 052 901 B1**
(45) Veröffentlichungstag und Bekanntmachung des Hinweises auf die Patenterteilung: **04.09.2002**
(21) Anmeldenummer: 99908858.6
(22) Anmeldetag: 08.02.1999
(51) Int. Cl.: A01N 37/46, A01N 37/32, A01N 43/84

(54) **LAGERSTABILE WÄSSRIGE FORMULIERUNGEN VON N-PHENYL-3,4,5,6-TETRAHYDROPHTHALIMID-HERBIZIDEN**
STORAGE STABLE AQUEOUS FORMULATIONS BASED ON N-PHENYL-3,4,5,6-TETRAHYDROPHTHALIMIDE HERBICIDES
FORMULATIONS AQUEUSES, STABLES AU STOCKAGE, D'HERBICIDES AU N-PHENYL-3,4,5,6-TETRAHYDROPHTALIMIDE

(30) Priorität: 07.02.1998 DE 19804913
(43) Veröffentlichungstag der Anmeldung: 22.11.2000
(73) Patentinhaber: BASF AKTIENGESELLSCHAFT, 67056 Ludwigshafen (DE)
(72) Erfinder: BRATZ, Matthias, D-67117 Limburgerhof (DE); BERGHAUS, Rainer, D-67346 Speyer (DE); WIGGER, August, D-95478 Kemnath-Stadt (DE); PARG, Adolf, D-67098 Bad Dürkheim (DE); NUYKEN, Wessel, D-67166 Otterstadt (DE)
(86) Internationale Anmeldenummer: EP9900807
(87) Internationale Veröffentlichungsnummer: WO99039579

(56) Entgegenhaltungen:
- EP-A- 0 362 639
- EP-A- 0 385 231
- CHEMICAL ABSTRACTS, vol. 110, no. 3, 16. Januar 1989 Columbus, Ohio, US; abstract no. 19867, XP002105786 & JP 63 190805 A (SUMITOMO) 8. August 1988
- DATABASE WPI Section Ch, Week 8429 Derwent Publications Ltd., London, GB; Class C01, AN 84-180125 XP002105788 & JP 59 101405 A (SUMITOMO CHEM CO LTD) , 12. Juni 1984
- CHEMICAL ABSTRACTS, vol. 112, no. 23, 4. Juni 1990 Columbus, Ohio, US; abstract no. 215895, T.KATAGI: "Hydrolysis of N-phenyl-3,4,5,6-tetrahydrophthalimide" XP002105787 in der Anmeldung erwähnt & NIPPON NOYAKU GAKKAISHI, Bd. 14, Nr. 4, 1989, Seiten 497-501,

## Beschreibung

Die vorliegende Erfindung betrifft lagerstabile wäßrige Formulierungen auf der Basis von N-Phenyl-3,4,5,6-tetrahydrophthalimid-Derivaten der Formel I 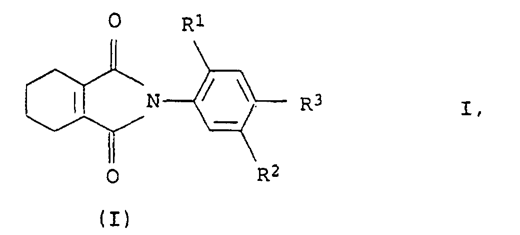 in denen die Substituenten folgende Bedeutungen haben:
- R¹: Wasserstoff, Fluor oder Chlor;
- R²: eine Gruppe A-CO-B, wobei
A für CH=C(Cl) oder CH=C(Br) und
B für C₁-C₆-Alkyl oder eine Gruppe OR⁴ oder SR⁴ steht, wobei
R⁴ Wasserstoff, C₁-C₄-Alkyl, (C₁-C₆-Alkoxy)carbonyl-C₁-C₆-alkyl oder C₁-C₆-Alkyloximino-C₁-C₆-alkyl bedeutet, oder
- R²: eine Gruppe OR⁵, SR⁵, COOR⁵ oder OCH₂COOR⁵ darstellt, wobei
R⁵ für Wasserstoff, C₁-C₆-Alkyl, C₃-C₇-Cycloalkyl, C₃-C₈-Alkenyl, C₃-C₆-Alkinyl oder C₁-C₆-Alkoxy-C₁-C₆-alkyl steht, oder
- R²: eine Gruppe CH₂-CO-OR⁶ ist, wobei
R⁶ für C₁-C₆-Alkyl oder C₁-C₆-Alkoxy-C₁-C₆-alkyl steht, oder
eine Gruppierung -NHSO₂-(C₁-C₆-Alkyl) und
- R³: Chlor oder Cyano.

Herbizide auf der Basis von Tetrahydrophthalimiden der Formel I sind aus der Literatur bekannt, z.B. aus: EP-A 240 659; Herbizide, Heck, B.; Fedtke, C.; R. R. Schmidt; Thieme Stuttgart 1995, S. 144; Proc. Brighton Crop Protection Conference Weeds 1989, Vol. 1, p. 41; Proc. Brighton Crop Protection Conference Weeds 1991, Vol. 1, p. 69; Anderson et al., American Chemical Soc. Symposium Series 559, 18-33, 1994.

Der Literatur ist zu entnehmen, daß diese Produkte meist als Festformulierungen, z. B. wasserdispergierbare Pulver oder Granulate, oder als Emulsionskonzentrate formuliert sind, z. B.Flumiclorac (Handelsname RESOURCE® EC, vgl. The Pesticide Manual, 10th Edition, S. 488) oder Flumioxazin (Handelsname SUMISOYA® WP, vgl. The Pesticide Manual, 10th Edition, S. 489).

Die genannten Formulierungen können in der Praxis eine Reihe von Nachteilen haben. So werden z. B. die in EC-Formulierungen (Emulsionskonzentrat) enthaltenen Lösemittel in der anhaltenden Umweltdiskussion als nachteilig erachtet. Außerdem bringen die verwendeten Lösungsmittel in der Regel eine Brennbarkeit mit sich, die nicht erwünscht ist. Die begrenzte Löslichkeit der Wirkstoffe limitiert zudem die Herstellung hochkonzentrierter Formulierungen. Bei WP-Formulierungen (wasserdispergierbare Pulver) wird die bei der Anwendung häufig auftretende Staubbildung als nachteilig angesehen.

Formulierungen in der Form wäßriger Suspensionskonzentrate sollten die vorstehend geschilderten Nachteile nicht aufweisen, doch sind derartige Konzentrate für Tetrahydrophthalimide bislang nicht bekannt.

Die Ursache dürfte darin liegen, daß in der Literatur die Stoffklasse der Tetrahydrophthalimide als hydrolyseempfindlich beschrieben wird. So ist aus Nippon Noyaku Gakkaishi (1989), 14(4), 497-501 (CA 1990: 215895) bekannt, daß Tetrahydrophthalimide in wässrigen Systemen nicht stabil sind. Bei pH 5 in wässrigem System werden Halbwertzeiten des Tetrahydrophthalimids von 4.14 Tagen und bei pH 7 von nur 9,14 Std. gemessen.

Auch in Biosci., Biotechnol., Biochem. (1993), 57(11) 1913-15 und Agric. Biol. Chem. (1991), 55(11), 2677-2678 wird die mangelnde Stabilität von Derivaten aus der Stoffklasse der Tetrahydrophthalimide beschrieben.

In der EP-A 385 231 wird die Verwendung bestimmter Wirkstoffe aus der Klasse der Tetrahydrophthalimide zur Desikkation und abszision von Pflanzenorganen beschrieben. In dieser Schrift wird erwähnt, daß die Wirkstoffe in Form verschiedener Formulierungen eingesetzt werden können, wobei in einer langen Liste auch hochkonzentrierte wäßrige Formen aufgeführt sind (S. 6, Zeilen 45ff.). Den weiteren Ausführungen ist jedoch zu entnehmen, daß die wäßrigen Anwendungsformen aus Emulsionskonzentraten, Pasten oder netzbaren Pulvern hergestellt werden, d.h. aus Anwendungsformen, die die eingangs geschilderten Nachteile aufweisen. Stets wird von lösungsmittelhaltigen Systemen ausgegangen. Die EP-A 385 231 offenbart damit dem Fachmann keine lagerstabilen wäßrigen Formulierungen, sondern führt ihn eher von einer solchen Anwendungsform weg.

In der EP-A 240 659 werden bestimmte Tetrahydrophthalimide beschrieben; die Ausführungen zu Formulierungen entsprechen denen in der vorstehend diskutierten EP 385 231.

Der vorliegenden Erfindung lag daher die Aufgabe zugrunde, wäßrige lagerstabile Formulierungen zu entwickeln, die die vorstehend geschilderten Nachteile nicht aufweisen. Insbesondere soll die Lagerstabilität den Richtlinien des FAO Manual on the development and use of FAO specifications for plant protection products, 44^{th} Edition, Rom, 1992, entsprechen. Danach darf der Produktgehalt der Formulierung bei einer Lagerung bei Raumtemperatur über einen Zeitraum von zwei Jahren nicht um mehr als 10 % abnehmen.

Überraschenderweise wurde nun gefunden, daß diese Aufgabe gelöst wird durch wäßrige Suspensionskonzentrate, die
a) 0,1-60 Gew.% eines Tetrahydrophthalimids der Formel I,
b) 0,1-30 Gew.% eines anionischen Tensids,
c) 0,1-30 Gew.% eines nichtionischen Tensids,
d) 0,01-5 Gew.% eines thixotropierenden Additivs,
e) 0-50 Gew.% weiterer herbizider Wirkstoffe,
f) 0-20 Gew.% weiterer Formulierungshilfsmittel und
g) 1-90 % Wasser
enthalten.

Die bei der Definition von B und R¹ bis R⁶ genannten organischen Molekülteile stellen Sammelbegriffe für individuelle Aufzählungen der einzelnen Bedeutungen dar. Sämtliche Kohlenstoffketten, also alle Alkyl-, Alkoxy-, Alkyloximino- und Alkoxyalkyl-Teile können geradkettig oder verzweigt sein.

Ferner stehen beispielsweise:
- C₁-C₆-Alkyl für: Methyl, Ethyl, n-Propyl, 1-Methylethyl, n-Butyl, 1-Methylpropyl, 2-Methylpropyl oder 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl, insbesondere für Methyl, Ethyl, n-Propyl, 1-Methylethyl, n-Butyl, 1,1-Dimethylethyl, n-Pentyl oder n-Hexyl;
- (C₁-C₆-Alkoxy)carbonyl für: (C₁-C₄-Alkoxy)carbonyl wie vorstehend genannt, sowie z.B. n-Pentoxycarbonyl, 1-Methylbutoxycarbonyl, 2-Methylbutoxycarbonyl, 3-Methylbutoxycarbonyl, 2,2-Dimethylpropoxycarbonyl, 1-Ethylpropoxycarbonyl, n-Hexoxycarbonyl, 1,1-Dimethylpropoxycarbonyl, 1,2-Dimethylpropoxycarbonyl, 1-Methylpentoxycarbonyl, 2-Methylpentoxycarbonyl, 3-Methylpentoxycarbonyl, 4-Methylpentoxycarbonyl, 1,1-Dimethylbutoxycarbonyl, 1,2-Dimethylbutoxycarbonyl, 1,3-Dimethylbutoxycarbonyl, 2,2-Dimethylbutoxycarbonyl, 2,3-Dimethylbutoxycarbonyl, 3,3-Dimethylbutoxycarbonyl, 1-Ethylbutoxycarbonyl, 2-Ethylbutoxycarbonyl, 1,1,2-Trimethylpropoxycarbonyl, 1,2,2-Trimethylpropoxycarbonyl, 1-Ethyl-1-methyl-propoxycarbonyl oder 1-Ethyl-2-methyl-propoxycarbonyl, insbesondere für Methoxycarbonyl, Ethoxycarbonyl oder 1-Methylethoxycarbonyl;
- (C₁-C₆-Alkoxy)carbonyl-C₁-C₆-alkoxy für: durch (C₁-C₆-Alkoxy)-carbonyl wie vorstehend genannt substituiertes C₁-C₆-Alkoxy, also z.B. für Methoxycarbonyl-methoxy, Ethoxycarbonylmethoxy, n-Propoxycarbonyl-methoxy, n-Butoxycarbonyl-methoxy, 1-(Methoxycarbonyl)ethoxy, 2-(Methoxycarbonyl)ethoxy, 2-(Ethoxycarbonyl)ethoxy, 2-(n-Propoxycarbonyl)ethoxy, 2-(n-Butoxycarbonyl)ethoxy, 3-(Methoxycarbonyl)propoxy, 3-(Ethoxycarbonyl)propoxy, 3-(n-Propoxycarbonyl)propoxy, 3-(n-Butoxycarbonyl)propoxy, 4-(Methoxycarbonyl)butoxy, 4-(Ethoxycarbonyl)butoxy, 4-(n-Propoxycarbonyl)butoxy, 4-(n-Butoxycarbonyl)butoxy, 5-(Methoxycarbonyl)pentoxy, 5-(Ethoxycarbonyl)pentoxy, 5-(n-Propoxycarbonyl)pentoxy, 5-(n-Butoxycarbonyl)butoxy, 6-(Methoxycarbonyl)hexoxy, 6-(Ethoxycarbonyl)hexoxy, 6-(n-Propoxycarbonyl)hexoxy oder 6-(n-Butoxycarbonyl)hexoxy, insbesondere für Methoxycarbonyl-methoxy oder 1-(Methoxycarbonyl)ethoxy;
- C₁-C₆-Alkoxy für: Methoxy, Ethoxy, n-Propoxy, 1-Methylethoxy, n-Butoxy, 1-Methylpropoxy, 2-Methylpropoxy oder 1,1-Dimethylethoxy, n-Pentoxy, 1-Methylbutoxy, 2-Methylbutoxy, 3-Methylbutoxy, 1,1-Dimethylpropoxy, 1,2-Dimethylpropoxy, 2,2-Dimethylpropoxy, 1-Ethylpropoxy, n-Hexoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy und 1-Ethyl-2-methylpropoxy, insbesondere für Methoxy, Ethoxy oder 1-Methylethoxy;
- C₁-C₆-Alkoxy-C₁-C₆-alkyl für: durch C₁-C₆-Alkoxy wie vorstehend genannt substituiertes C₁-C₆-Alkyl, also z.B. für Methoxymethyl, Ethoxymethyl, n-Propoxymethyl, (1-Methylethoxy)methyl, n-Butoxymethyl, (1-Methylpropoxy)methyl, (2-Methylpropoxy)methyl, (1,1-Dimethylethoxy)methyl, 2-(Methoxy)ethyl, 2-(Ethoxy)ethyl, 2-(n-Propoxy)ethyl, 2-(1-Methylethoxy)ethyl, 2-(n-Butoxy)ethyl, 2-(1-Methylpropoxy)ethyl, 2-(2-Methylpropoxy)ethyl, 2-(1,1-Dimethylethoxy)ethyl, 2-(Methoxy)propyl, 2-(Ethoxy)propyl, 2-(n-Propoxy)propyl, 2-(1-Methylethoxy)propyl, 2-(n-Butoxy)propyl, 2-(1-Methylpropoxy)propyl, 2-(2-Methylpropoxy)propyl, 2-(1,1-Dimethylethoxy)propyl, 3-(Methoxy)propyl, 3-(Ethoxy)-propyl, 3-(n-Propoxy)propyl, 3-(1-Methylethoxy)propyl, 3-(n-Butoxy)propyl, 3-(1-Methylpropoxy)propyl, 3-(2-Methylpropoxy)propyl, 3-(1,1-Dimethylethoxy)propyl, 2-(Methoxy)-butyl, 2-(Ethoxy)butyl, 2-(n-Propoxy)butyl, 2-(1-Methylethoxy)butyl, 2-(n-Butoxy)butyl, 2-(1-Methylpropoxy)butyl, 2-(2-Methylpropoxy)butyl, 2-(1,1-Dimethylethoxy)butyl, 3-(Methoxy)butyl, 3-(Ethoxy)butyl, 3-(n-Propoxy)butyl, 3-(1-Methylethoxy)butyl, 3-(n-Butoxy)butyl, 3-(1-Methylpropoxy)butyl, 3-(2-Methylpropoxy)butyl, 3-(1,1-Dimethylethoxy)butyl, 4-(Methoxy)butyl, 4-(Ethoxy)butyl, 4-(n-Propoxy)butyl, 4-(1-Methylethoxy)butyl, 4-(n-Butoxy)butyl, 4-(1-Methylpropoxy)butyl, 4-(2-Methylpropoxy)butyl oder 4-(1,1-Dimethylethoxy)butyl, insbesondere für Methoxymethyl oder 2-Methoxyethyl;
- C₁-C₆-Alkyloximino-C₁-C₆-alkyl für: durch C₁-C₆-Alkyloximino wie Methoxyimino, Ethoxyimino, 1-Propoxyimin 2-Propoxyimino, 1-Methylethoxyimino, n-Butoxyimino, sec.-Butoxyimino, tert.-Butoxyimino, 1-Methyl-1-propoxyimino, 2-Methyl-1-propoxyimino, 1-Methyl-2-propoxyimino, 2-Methyl-2-propoxyimino, n-Pentoxyimino, 2-Pentoxyimino, 3-Pentoxyimino, 4-Pentoxyimino, 1-Methyl-1-butoxyimino, 2-Methyl-l-butoxyimino, 3-Methyl-1-butoxyimino, 1-Methyl-2-butoxyimino, 2-Methyl-2-butoxyimino, 3-Methyl-2-butoxyimino, 1-Methyl-3-butoxyimino, 2-Methyl-3-butoxyimino, 3-Methyl-3-butoxyimino, 1,1-Dimethyl-2-propoxyimino, 1,2-Dimethyl-1-propoxyimino, 1,2-Dimethyl-2-propoxyimino, 1-Ethyl-1-propoxyimino, 1-Ethyl-2-propoxyimino, n-Hexoxyimino, 2-Hexoxyimino, 3-Hexoxyimino, 4-Hexoxyimino, 5-Hexoxyimino, 1-Methyl-1-pentoxyimino, 2-Methyl-l-pentoxyimino, 3-Methyl-1-pentoxyimino, 4-Methyl-1-pentoxyimino, 1-Methyl-2-pentoxyimino, 2-Methyl-2-pentoxyimino, 3-Methyl-2-pentoxyimino, 4-Methyl-2-pentoxyimino, 1-Methyl-3-pentoxyimino, 2-Methyl-3-pentoxyimino, 3-Methyl-3-pentoxyimino, 4-Methyl-3-pentoxyimino, 1-Methyl-4-pentoxyimino, 2-Methyl-4-pentoxyimino, 3-Methyl-4-pentoxyimino, 4-Methyl-4-pentoxyimino, 1,1-Dimethyl-2-butoxyimino, 1,1-Dimethyl-3-butoxyimino, 1,2-Dimethyl-1-butoxyimino, 1,2-Dimethyl-2-butoxyimino, 1,2-Dimethyl-3-butoxyimino, 1,3-Dimethyl-1-butoxyimino, 1,3-Dimethyl-2-butoxyimino, 1,3-Dimethyl-3-butoxyimino, 2,2-Dimethyl-3-butoxyimino, 2,3-Dimethyl-1-butoxyimino, 2,3-Dimethyl-2-butoxyimino, 2,3-Dimethyl-3-butoxyimino, 3'3-Dimethyl-1-butoxyimino, 3,3-Dimethyl-2-butoxyimino, 1-Ethyl-1-butoxyimino, 1-Ethyl-2-butoxyimino, 1-Ethyl-3-butoxyimino, 2-Ethyl-1-butoxyimino, 2-Ethyl-2-butoxyimino, 2-Ethyl-3-butoxyimino, 1,1,2-Trimethyl-2-propoxyimino, 1-Ethyl-1-methyl-2-propoxyimino, 1-Ethyl-2-methyl-1-propoxyimino und 1-Ethyl-2-methyl-2-propoxyimino, substituiertes C₁-C₆-Alkyl, also z.B. für Methoxyiminomethyl;
- C₃-C₈-Alkenyl für: z.B. Prop-2-en-1-yl, n-Buten-4-yl, 1-Methyl-prop-2-en-1-yl, 2-Methyl-prop-2-en-1-yl, 2-Buten-1-yl, n-Penten-3-yl, n-Penten-4-yl, 1-Methyl-but-2-en-1-yl, 2-Methyl-but-2-en-1-yl, 3-Methyl-but-2-en-1-yl, 1-Methylbut-3-en-1-yl, 2-Methyl-but-3-en-1-yl, 3-Methyl-but-3-en-1-yl, 1,1-Dimethyl-prop-2-en-1-yl, 1,2-Dimethyl-prop-2-en-1-yl, 1-Ethyl-prop-2-en-1-yl, n-Hex-3-en-1-yl, n-Hex-4-en-1-yl, n-Hex-5-en-1-yl, 1-Methyl-pent-3-en-1-yl, 2-Methylpent-3-en-1-yl, 3-Methyl-pent-3-en-1-yl, 4-Methyl-pent-3-en-1-yl, 1-Methyl-pent-4-en-1-yl, 2-Methyl-pent-4-en-1-yl, 3-Methyl-pent-4-en-1-yl, 4-Methyl-pent-4-en-1-yl, 1,1-Dimethyl-but-2-en-1-yl, 1,1-Dimethyl-but-3-en-1-yl, 1,2-Dimethyl-but-2-en-1-yl, 1,2-Dimethyl-but-3-en-1-yl, 1,3-Dimethyl-but-2-en-1-yl, 1,3-Dimethyl-but-3-en-1-yl, 2,2-Dimethyl-but-3-en-1-yl, 2,3-Dimethyl-but-2-en-1-yl, 2,3-Dimethyl-but-3-en-1-yl, 3,3-Dimethyl-but-2-en-1-yl, 1-Ethyl-but-2-en-1-yl, 1-Ethyl-but-3-en-1-yl, 2-Ethyl-but-2-en-1-yl, 2-Ethyl-but-3-en-1-yl, 1,1,2-Trimethyl-prop-2-en-1-yl, 1-Ethyl-1-methyl-prop-2-en-1-yl oder 1-Ethyl-2-methylprop-2-en-1-yl, insbesondere für Prop-2-en-1-yl oder n-Buten-4-yl;
- C₃-C₆-Alkinyl für: Prop-1-in-1-yl, Prop-2-in-1-yl, n-But-1-in-1-yl, n-But-1-in-3-yl, n-But-1-in-4-yl, n-But-2-in-1-yl, n-Pent-1-in-1-yl, n-Pent-1-in-3-yl, n-Pent-1-in-4-yl, n-Pent-1-in-5-yl, n-Pent-2-in-1-yl, n-Pent-2-in-4-yl, n-Pent-2-in-5-yl, 3-Methyl-but-1-in-3-yl, 3-Methyl-but-1-in-4-yl, n-Hex-1-in-1-yl, n-Hex-1-in-3-yl n-Hex-1-in-4-yl, n-Hex-1-in-5-yl, n-Hex-1-in-6-yl, n-Hex-2-in-1-yl, n-Hex-2-in-4-yl, n-Hex-2-in-5-yl, n-Hex-2-in-6-yl, n-Hex-3-in-1-yl, n-Hex-3-in-2-yl, 3-Methyl-pent-1-in-1-yl, 3-Methyl-pent-1-in-3-yl, 3-Methylpent-1-in-4-yl, 3-Methyl-pent-1-in-5-yl, 4-Methyl-pent-1-in-1-yl, 4-Methyl-pent-2-in-4-yl oder 4-Methyl-pent-2-in-5-yl, insbesondere für Prop-2-in-1-yl;
- C₃-C₇-Cycloalkyl für: Cyclopropyl, Cyclobutyl, Cyclopentyl, Cyclohexyl oder Cycloheptyl, insbesondere für Cyclopentyl oder Cyclohexyl.

Bevorzugt enthalten die erfindungsgemäßen Formulierungen 5-60, insbesondere 5-50, Gew.% eines Tetrahydrophthalimids der Formel I. Bevorzugte Tetrahydrophthalimide sind Verbindungen der Formel I in denen R¹ für Wasserstoff oder Fluor, R³ für Cl und R² für A-CO-B, OR⁵ (mit R₅ = C₁-C₆-Alkyl, C₂-C₈-Alkenyl oder C₃-C₇-Cycloalkyl) oder OCH₂COOR⁵ (R⁵ = C₁-C₆-Alkyl) stehen. Besonders bevorzugt sind die Verbindungen I.1 bis I.5:
- I.1:: R¹ = H, R³ = Cl, R² = -CH=C(Cl)-COOC₂H₅ (common name: Cinidon-ethyl, vgl. EP-A 240 659)
- I.2:: R¹ = F, R³ = Cl, R² = OCH₂-COOC₅H₁₁ (common name: Flumiclorac-pentyl)
- I.3:: R¹ = F, R³ = Cl, R² = O-cyclopentyl
- I.4:: R¹ = F, R³ = Cl, R² = OCH(CH₃)-C≡CH (common name: Flumipropyn)
- I.5:: N-(7-fluoro-3,4-dihydro-3-oxo-4-prop-2-ynyl-2H-1,4-benzoxazin-6-yl)cyclohex-1-ene-1,2-dicarboximide (common name: Flumioxazin)

Als Komponente b) enthalten die erfindungsgemäßen Formulierungen 0,1-30, vorzugsweise 0,3-15 und insbesondere 0,5-7 Gew.% eines anionischen Tensids.

Solche anionischen Tenside sind dem Fachmann an sich bekannt und in der Literatur beschrieben.

Geeignete ionische Tenside sind beispielsweise Alkylarylsulfonate, Phenylsulfonate, Alkylsulfate, Alkylsulfonate, Alkylethersulfate, Alkylarylethersulfate, Alkylpolyglykoletherphosphate, Polyarylphenyletherphosphate, Alkylsulfosuccinate, Olefinsulfonate, Paraffinsulfonate, Petroleumsulfonate, Tauride, Sarkoside, Fettsäuren, Alkylnaphthalinsulfonsäuren, Naphthalinsulfonsäuren, Ligninsulfonsäuren, Kondensationsprodukte sulfonierter Naphthaline mit Formaldehyd oder mit Formaldehyd und Phenol und gegebenfalls Harnstoff, Lignin-Sulfit-Ablauge, einschließlich ihrer Alkali-, Erdalkali-, Ammonium- und Amin-Salze, Alkylphosphate, quartäre Ammoniumverbindungen, Aminoxide, Betaine und deren Gemische.

Bevorzugt sind Kondensationsprodukte sulfonierter Naphthaline oder Phenole mit Formaldehyd und gegebenfalls Harnstoff, die als wasserlösliche Salze vorliegen.

Als Komponente c) enthalten die erfindungsgemäßen wäßrigen lagerstabilen Formulierungen 0,1 bis 30, vorzugsweise 0,3-15 und insbesondere 0,5 bis 7, Gew.% eines nichtionischen Tensids.

Geeignete nichtionische Tenside sind beispielsweise Alkylphenolalkoxylate, Alkoholalkoxylate, Fettaminalkoxylate, Polyoxyethylenglycerolfettsäureester, Rizinusölalkoxylate, Fettsäurealkoxylate, Fettsäureamidalkoxylate,Fettsäurepolydiethanolamide, Lanolinethoxylate, Fettsäurepolyglykolester, Isotridecylalkohol, Fettsäureamide, Methylcellulose, Fettsäureester, Silicon-Öle, Alkylpolyglykoside, Glycerolfettsäureester, Polyethylenglykol, polypropylenglykol, Polyethylenglykolpolypropylenglykol-Block-copolymere, Polyethylenglykolalkylether, Polypropylenglykolalkylether, Polyethylenglykolpolypropylenglykolether-Blockcopolymere und deren Gemische, Polyacrylate und Acrylsäurepfropfcopolymere.

Bevorzugt sind Polyethylenglykol, Polypropylenglykol, Polyethylenglykolpolypropylenglykol-Blockcopolymere, Polyethylenglykolalkylether, Polypropylenglykolalkylether, Polyethylenglykolpolypropy-lenglykolether-Blockcopolymere und deren Gemische.

Bevorzugte Gemische von ionischen und nichtionischen Tensiden sind Kondensationsprodukte sulfonierter Phenole mit Harnstoff und Formaldehyd sowie Polyethylenglykolpolypropylenglykolether-Blockcopolymere.

Geeignete thixotrope Additive d) sind Verbindungen, die der Formulierung ein pseudoplastisches Fließverhalten verleihen, d. h. eine hohe Viskosität im Ruhezuscand und eine niedrige Viskosität im bewegten Zustand. Der Gehalt an thixotropierenden Additiven beträgt 0,01 bis 5, vorzugsweise 0,05 bis 3 und insbesondere 0,1 bis 2, Gew.%.

Geeignete Verbindungen sind beispielsweise Polysaccharide wie Xanthan® Gum, Kelzan® der Fa. Kelco oder Rhodopol® 23 (Rhone Poulenc).

Neben den wesentlichen Komponenten a) bis d) können die erfindungsgemäßen Formulierungen noch weitere herbizide Wirkstoffe und weitere Formulierungshilfsmittel enthalten.

Als weitere herbizide Wirkstoffe kommen insbesondere die nachfolgend aufgeführten Gruppen in Betracht:
e1: Amide wie Propanil;
e2: Aminophosphorsäuren wie Bilanafos (Bialaphos), Buminafos, Glufosinate-ammonium, Glyphosate, Sulfosate;
e3: Anilide wie Thiafluamide;
e4: Aryloxyalkansäuren wie 2,4-D, 2,4-DB, Clomeprop, Dichlorprop, Dichlorprop-P, (2,4-DP-P), Fluoroxypyr, MCPA, MCPB, Mecoprop, Mecoprop-P, Napropamide, Napropanilide und Triclopyr;
e5: Benzoesäuren wie Chloramben und Dicamba;
e6: Benzothiadiazinone wie Bentazon;
e7: Bleacher wie Clomazone (Dimethazone), Flurtamone, Diflufenican, Fluorochloridone, Flupoxam, Fluridone, Pyrazolate, Sulcotrione (Chlor-mesulone), Isoxaflutol und 2-(2'-Chlor-3'-Ethoxy-4'-ethylsulfonyl-benzoyl)-4-methyl-cyclohexan-1,3-dion;
e8: Carbamate wie Asulam, Barban, Butylate, Carbetamide, Chlorbufam, Chlorpropham, Cycloate, Desmedipham, Diallate, EPTC, Esprocarb, Molinate, Orbencarb, Pebulate, Phenisopham, Phenmedipham, Propham, Prosulfocarb, Pyributicarb, Sulfallate (CDEC), Terbucarb, Thiobencarb (Benthiocarb), Tiocarbazil, Triallate und Vernolate;
e9: Chinolincarbonsäuren wie Quinclorac und Quinmerac;
e10: Chloracetanilide wie Acetochlor, Alachlor, Butachlor, Butenachlor, Diethatyl-ethyl, Dimethachlor, Dimethenamide (vgl. auch unter Kategorie c2) Metazachlor, Metolachlor, Pretilachlor, Propachlor, Prynachlor, Terbuchlor, Thenylchlor und Xylachlor;
e11: Dinitroaniline wie Benefin, Butralin, Dinitramin, Ethalfluralin, Fluchloralin, Isopropalin, Nitralin, Oryzalin, Pendimethalin, Prodiamine, Profluralin und Trifluralin;
e12: Dinitrophenole wie Bromofenoxim, Dinoseb, Dinoseb-acetat, Dinoterb und DNOC;
e13: Diphenylether wie Acifluorfen-sodium, Aclonifen, Bifenox, Chlornitrofen (CNP), Difenoxuron, Ethoxyfen, Fluorodifen, Fluoroglycofen-ethyl, Fomesafen, Furyloxyfen, Lactofen, Nitrofen, Nitrofluorfen und Oxyfluorfen;
e14: Harnstoffe wie Benzthiazuron, Buturon, Chlorbromuron, Chloroxuron, Chlortoluron, Cumyluron, Dibenzyluron, Cycluron, Dimefuron, Diuron, Dymron, Ethidimuron, Fenuron, Fluormeturon, isoproturon, Isouron, Karbutilat, Linuron, Methabenzthiazuron, Metobenzuron, Metoxuron, Monolinuron, Monuron, Neburon, Siduron, Tebuthiuron, Trimeturon und Difenuron;
e15: Imidazolinone wie Imazamethapyr, Imazapyr, Imazaquin, Imazethabenz-methyl (Imazame), Imazethapyr und Imazamox;
e16: Oxadiazole wie Methazole, Oxadiargyl und Oxadiazone;
e17: Phenole wie Bromoxynil und loxynil;
e18: Phenoxypropionsäureester wie Clodinafop, Cyhalofop-butyl, Diclofop-methyl, Fenoxaprop-ethyl, Fenoxaprop-p-ethyl, Fenthiaprop-ethyl, Fluazifop-butyl, Fluazifop-p-butyl, Haloxyfop-ethoxyethyl, Haloxyfop-methyl, Haloxyfop-p-methyl, Isoxapyrifop, Propaquizafop, Quizalofop-ethyl, Quizalofop-p-ethyl und Quizalofoptefuryl;
e19: Protoporphyrinogen-IX-Oxydase-Hemmer wie Benzofenap, Fluthiacet-methyl, Pyrazoxyfen, Sulfentrazone, Thidiazimine, Carfentrazone, Azafenidin, Oxadiazon und Oxadiargyl;
e20: Pyridazine wie Chloridazon, Norflurazon und Pyridate;
e21: Pyridincarbonsäuren wie Clopyralid und Picloram;
e21: Sulfonamide wie Flumetsulam, Metosulam, Cloransulam-methyl und Diclosulam;
e22: Triazine wie Ametryn, Atrazin, Aziprotryn, Cyanazine, Cyprazine, Desmetryn, Dimethamethryn, Dipropetryn, Eglinazin-ethyl, Hexazinon, Procyazine, Prometon, Prometryn, Propazin, Secbumeton, Simazin, Simetryn, Terbumeton, Terbutryn, Terbutylazin, Trietazin und Dimesyflam;
e23: Triazinone wie Ethiozin, Metamitron und Metribuzin;
e24: Uracile wie Bromacil, Lenacil und Terbacil;
e25: Sulfonylharnstoffe wie Amidosulfuron, Azimsulfuron, Bensulfuron-methyl, Chlorimuron-ethyl, Chlorsulfuron, Chlorsulfoxim, Cinosulfuron, Cyclosulfamuron, Ethametsulfuron-methyl, Ethoxysulfuron, Flazasulfuron, Flupyrsulfuron, Halosulfuron-methyl, Imazosulfuron, Methsulfuron-methyl, Nicosulfuron, Oxysulfuron, Primisulfuron, Prosulfuron, Pyrazosulfuron-ethyl, Rimsulfuron, Sulfosulfuron, Sulfometuron-methyl, Thifensulfuron-methyl, Triasulfuron, Tribenuron-methyl und Triflusulfuron-methyl;
e26: Dipyridylene wie Difenzoquat, Diquat und Paraquat.

### Bevorzugte weitere Herbizide e) sind:

Aryloxyalkancarbonsäuren wie 2,4-D, 2,4-DB, CMPP, CMPP-P, Dichlorprop, Dichlorprop-P, MCPA, MCPB, die Ester dieser Verbindungen, insbesondere die Isopropyl-, Butyl- und Isooctylester, vor allem die 2-Ethylhexylester, sowie [(4-Amino-3,5-dichlor-6-fluor-2-pyridyl]oxy]essigsaure (Fluroxypyr), Dicamba, Chlortoluron, Carfentrazon-ethyl, Isoproturon, Difenuron, Metoxuron, Monolinuron, Neburon, Imazethabenz-methyl, Bromoxynil, Ioxynil, Clodinafop, Cyhalofopbutyl, Diclofop-methyl, Fenoxaprop-ethyl, Fenaxoprop-p-ethyl, Fenthiaprop-ethyl, Fluazifop-butyl, Fluazifop-p-butyl, Haloxyfop-ethoxyethyl, Haloxyfop-methyl, Haloxyfopp-mechyl, Isoxapyrifop, Propaquizafop, Quizalofop-ethyl, Quizalofop-p-ethyl, Quizalofop-tefuryl, Flumetsulam, Metosulam, Cloransulam-methyl, Diclosulam, Atrazin, Simazin, Cyanazin, Terbutryn, Diflufenzopyr, Amidosulfuron, Chlorimuron, Chlorsulfuron, Halosulfuron, Metsulfuron-methyl, Primisulfuron, Thifensulfuron, Triasulfuran, Tribenuron-methyl, Prosulfuron, Ethoxysulfuron, Flupyrsulfuron, Sulfosulfuron, N-[[[4-methoxy-6-(trifluormethyl)-1,3,5-triazin-2-yl]amino]carbonyl]-2-(trifluormethyl)benzolsulfonamid.

### Ganz besonders bevorzugte weitere Herbizide e) sind:

Carfentrazone-ethyl, Dimethenamid, 2,4-D, Dicamba, Fluoroxypyr, pendimethalin, Isoproturon, Chlortoluron, Flupyrsulfuron, N-[[4-methoxy-6-(trifluormethyl)-1,3,5-triazin-2-yl)amino]carbonyl] -2-(trifluormethyl)benzolsulfonamid, Metsulfuron-methyl, Amidosulfuron, Imazethabenz-methyl, Metosulam, Diflufenican, Flurtamone und Sulfosulfuron.

Der Anteil an weiteren Herbiziden an den erfindungsgemäßen Formulierungen beträgt 0 bis 50, vorzugsweise 0 bis 35 und insbesondere 1 bis 30, Gew.%, bezogen auf das Gesamtgewicht der Formulierung.

In der erfindungsgemäßen wäßrigen Herbizid-Formulierung kann gegebenenfalls auch ein oder mehrere Formulierungshilfsmittel f) mitverwendet werden. Geeignete Formulierungshilfsmittel sind beispielsweise Füllstoffe, Antischaummittel, Bakterizide und Forstschutzmittel. Lösemittel können auch zugesetzt werden, doch sollte deren Anteil so gering wie möglich gehalten werden.

Als Lösungsmittel können verwendet werden C₁-C₆-Alkohole wie Methanol, Ethanol, Propanol und Hexanol, Glykole wie Ethylenglykol, Propylenglykol und Butylenglykol, Glykolether, z.B. Alkylenglykolmono-C₁-C₆-alkylether wie Ethylenglykolmonomethylether und Ethylenglykolmonoethylether sowie aromatische Lösungsmittel wie Solvesso 200 (Fa. Exxon), Fettsäureester wie Methyloleat, Pflanzenöle wie Sojaöl, Sonnenblumenöl, Rapsöl. Der Anteil an Lösungsmittel liegt im allgemeinen im Bereich von 0-20 Gew.-%.

Als Antischaummittel kommen beispielsweise Silikonemulsionen, langkettige Alkohole, Fettsäuren, fluororganische Verbindungen und deren Gemische in Betracht.

Bakterizide können zur Stabilisierung der wäßrigen Fungizid-Formulierung zugesetzt werden. Geeignete Bakterizide sind beispielsweise Proxel® (Fa. ICI), Nipacide® BIT 20 (Fa. Thor Chemie), Kathon® MK, Acticide® (Rohm & Haas).

Der Gehalt an Antischaummitteln und Bakteriziden liegt im allgemeinen jeweils im Bereich von 0,1-5, vorzugsweise von 0,1-2, Gew.%.

Die Formulierungshilfsmittel können in einer Konzentration von 0 bis 20 Gew.-% in der Pflanzenschutzwirkstoff-Formulierung mitverwendet werden. Sind sie Bestandteil der Formulierung, haben sich 5 bis 15 Gew.-% bewährt.

Die erfindungsgemäßen wäßrigen Formulierungen können nach dem Fachmann an sich bekannten und in der Literatur beschriebenen Verfahren zur Herstellung wäßriger Suspensionskonzentrate hergestellt werden, weshalb sich hier nähere Angaben zur Herstellung erübrigen.

Die erfindungsgemäßen Formulierungen finden im Bereich des Pflanzenschutzes bei der Bekämpfung von unerwünschtem Pflanzenwachstum Einsatz (als Herbizide).

Die Applikation der erfindungsgemäßen herbiziden Formulierungen kann im Vorauflauf- oder im NAchauflauf-Verfahren erfolgen. Sind die Wirkstoffe für gewisse Kulturpflanzen weniger verträglich, so können Ausbringungstechniken angewandt werden, bei welchen die herbiziden Formulierungen mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender Pflanzen oder die unbedeckte Bodenfläche gelangen (post-directed, lay-by).

Dazu werden die erfindungsgemäßen Formulierungen nach Verdünnung den Pflanzen vornehmlich durch Blattspritzung zugeführt. Dabei kann die Ausbringung z.B. mit Wasser als Trägerscoff durch übliche Spritztechniken mit Spritzbrühenmengen von etwa 100 bis 1000 l/ha erfolgen.

Die erfindungsgemäßen Mittel können in Aufwandmengen von 0,001 bis 5 kg/ha, vorzugsweise 0,01 bis 3 kg/ha, insbesondere 0,01 bis 0,6 kg/ha, eingesetzt werden.

Die nachfolgenden Beispiele verdeutlichen den Gegenstand der Erfindung. Die in den Beispielen beschriebenen Prüfungen wurden dabei wie folgt durchgeführt:
Der Wirkstoffgehalt der Formulierungen wurde jeweils mittels quantitativer HPLC bestimmt, und wird in Gramm pro Liter angegeben.
Zur Untersuchung der Lagerstabilität werden Proben der jeweiligen Formulierung für eine bestimmte Zeit in fest verschlossenem Glasgefäßen bei der jeweils angegebenen Temperatur gelagert. Anschließend werden die Proben untersucht und mit dem Vergleichswert zu Beginn der Lage rung (Nullwert) verglichen. Der Wirkstoffgehalt wird als relativer Anteil, bezogen auf den Nullwert (in Prozent) angegeben.
Die Lagerversuche wurden in Anlehnung an die Methode CIPAC MT 46 durchgeführt. Dabei wird die Langzeitstabilität eines Produkts durch Kurzlagerung bei erhöhter Temperatur abgeschätzt.
Die in den Beispielen eingesetzten Additive sind in der nachstehenden Tabelle 1 beschrieben:

| **Name** | **chem. Bezeichnung** | **Bezugsquelle** |
|---|---|---|
| Wettol® D1 | Phenolsulfonsäure/ Formaldehyd-Kondensat | BASF AG |
| Pluronic®PE 10500 | EO/PO-Blockcopolymer | BASF AG |
| Antischaummittel SRE | Silikonölemulsion | Wacker-Chemie |
| Kelzan® | Polysaccharid | Fa. Kelco |
| Kathon® MK | Bakterizid | Fa. Rohm & Haas |

### Beispiel 1:

504 g des Wirkstoffs I.1 (techn. 99 %), 20 g Wettol® Dl der Fa. BASF, 30 g Pluronic® PE 10500 der BASF AG, 2 g Kelzan®, 1,4 g Kathon® MK, 50 g 1,2-Propylenglykol und 5 g Siliconemulsion der Fa. Wacker wurden mit Wasser auf 1 1 aufgefüllt und anschließend in einer Kugelmühle auf eine Teilchengröße von 60 % < 2 Mikron vermahlen (gemessen mit Cilas Granulometer 715, Fa. Cilas, Marcoussis, Frankreich).

### Beispiel 2

Wie unter Bsp. 1 beschrieben, wurden aus
213 g I.1 (techn. 93,8 %),
70.g Propylenglykol,
20 g Wettol® D 1,
20 g Pluronic® PE 10500,
5 g Silikonemulsion,
3 g Kelzan® S,
ad. 1000 ml Wasser ein Suspensionskonzentrat hergestellt.

### Beispiel 3

100 ml des unter Bsp. 1 erhaltenen Konzentrats wurden mit einem Propellerrührer mit 2 l eines Suspensionskonzentrates mit 400 g/l Pendimethalin vermischt. Man erhielt ein Suspensionskonzentrat (SC) mit 24 g/l I.1 und 380 g/l Pendimethalin.

### Beispiel 4

100 ml des unter Bsp. 1 erhaltenen Konzentrates wurde mittels eines Propellerrührers mit 4 l eines Konzentrats enthaltend 300 g/l Chlortoluron und 200 g/l Pendimethalin vermischt. Man erhielt ein Suspensionskonzentrat mit 12 g/l I.1, 293 g/l Chlortoluron und 195 g/l Pendimethalin.

### Beispiel 5

100 ml des in Bsp. 1 erhaltenen Konzentrates wurde mittels Propellerrührer mit 2,5 l eines Konzentrats enthaltend 700 g/l Chlortoluron vermischt. Man erhielt ein Suspensionskonzentrat mit 19 g/l I.1 und 673 g/l Chlortoluron.

### Beispiel 6

221 g Cinidon-ethyl (I.1) (tech. 95 %), 355 g N-[[[4-methoxy-6-(trifluormethyl)-1,3,5-triazin-2-yl]amino]carbonyl]-2-(trifluormethyl)benzolsulfonamid (techn. 98 %), 20 g Wettol® D 1, 30 g Pluronic® PE 10500, 5 g Silikonemulsion, 2 g Kelzan® S, 1,8 g Kathon® MK und 70 g Propylenglykol wurden mit Wasser auf 1 l aufgefüllt und mit einer Kugelmühle (Dyno-Mill) auf eine Teilchengröße 60 % < 2 µm vermahlen. Man erhielt ein Suspensionskonzentrat mit 210 g/l Cinidon-ethyl und 350 g/l N-[[[4-methoxy-6-(trifluormethyl)-1,3,5-triazin-2-yl]amino]carbonyl]-2-(trifluormethyl)benzolsulfonamid.

### Beispiel 7

40 ml des in Bsp. 1 erhaltenen Konzentrates wurden mittels Propellerrührer mit l eines Konzentrates, enthaltend 100 g/l Diflufenican und 250 g/l Flurtamone, vermischt. Man erhielt eine stabile SC-Formulierung.

Die Ergebnisse der Lagerstabilitätstets und der Bestimmung der Wirkstoffgehalte sind der nachfolgenden Tabelle zu entnehmen:

| Beispiel | Lagerdauer | Temperatur | Wirkstoffgehalt an I.1 |
|---|---|---|---|
| 1 | 30 d | 50°C | 98 % |
| 3 | 30 d | 50°C | 98 % |
| 4 | 30 d | 50°C | 95 % |
| 5 | 30 d | 50°C | 90 % |
| 6 | 14 d | 54°C | 99 % |

Die Ergebnisse in der Tabelle zeigen die sehr gute Lagerstabilität der erfindungsgemäßen wäßrigen Formulierungen.

## Patentansprüche

1. Lagerstabile wäßrige Formulierungen enthaltend
a) 0,1-60 Gew.% eines Tetrahydrophthalimids der Formel I 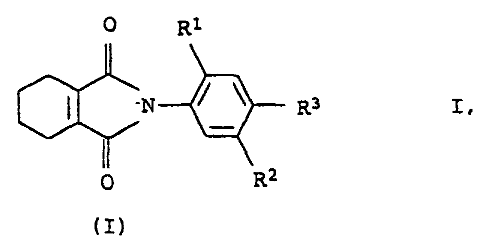 in denen die Substituenten folgende Bedeutungen haben:
R¹ Wasserstoff, Fluor oder Chlor;
R² eine Gruppe A-CO-B, wobei
A für CH=C(C1) oder CH=C(Br) und
B für C₁-C₆-Alkyl oder eine Gruppe OR⁴ oder SR⁴ steht,
wobei
R⁴ Wasserstoff, C₁-C₄-Alkyl, (C₁-C₆-Alkoxy)carbonyl-C₁-C₆-alkyl oder C₁-C₆-Alkyloximino-C₁-C₆-alkyl bedeutet, oder
R² eine Gruppe OR⁵, SR⁵, COOR⁵ oder OCH₂COOR⁵ darstellt, wobei
R⁵ für Wasserstoff, C₁-C₆-Alkyl, C₃-C₇-Cycloalkyl, C₃-C₈-Alkenyl, C₃-C₆-Alkinyl oder C₁-C₆-Alkoxy-C₁-C₆-alkyl steht, oder
R² eine Gruppe CH₂-CO-OR⁶ ist, wobei
R⁶ für C₁-C₆-Alkyl oder C₁-C₆-Alkoxy-C₁-C₆-alkyl steht, oder
R² eine Gruppierung -NHSO₂-(C₁-C₆-Alkyl) und
R³ Chlor oder Cyano;
b) 0,1-30 Gew.% eines anionischen Tensids,
c) 0,1-30 Gew.% eines nichtionischen Tensids,
d) 0,01-5 Gew.% eines thixotropierenden Additivs,
e) 0-50 Gew.% weiterer herbizider Wirkstoffe,
f) 0-20 Gew.% weiterer Formulierungshilfsmittel und
g) 1-90 % Wasser, mit der Maßgabe, daß die Summe der Komponenten a) bis g) 100 Gew.-% ergibt.

2. Lagerstabile wäßrige Formulierung nach Anspruch 1, enthaltend als Komponente a) mindestens einen der Wirkstoffe I.1 bis I.5:
I.1: R¹ = H, R³ = Cl, R² = -CH=C(Cl)-COOC₂H₅
I.2: R¹ = F, R³ = Cl, R² = OCH₂-COOC₅H₁₁
I.3: R¹ = F, R³ = Cl, R² = O-cyclopentyl
I.4: R¹ = F, R³ = Cl, R² = OCH(CH₃)-C≡CH
I.5: N-(7-fluor-3,4-dihydro-3-oxo-4-prop-2-ynyl-2H-1,4-benzoxazin-6-yl)-cyclohex-1-en-1,2-dicarboximid.

## Claims

1. A storage-stable aqueous formulation comprising
a) 0.1-60% by weight of a tetrahydrophthalimide of the formula I 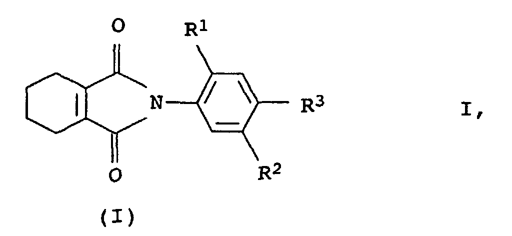 where the substituents have the following meanings:
R¹ is hydrogen, fluorine or chlorine;
R² is a group A-CO-B where
A is CH=C(Cl) or CH=C(Br) and
B is C₁-C₆-alkyl or a group OR⁴ or SR⁴ where
R⁴ is hydrogen, C₁-C₄-alkyl, (C₁-C₆-alkoxy)carbonyl-C₁-C₆-alkyl or C₁-C₆-alkyloximino-C₁-C₆-alkyl, or
R² is a group OR⁵, SR⁵, COOR⁵ or OCH₂COOR⁵ where
R⁵ is hydrogen, C₁-C₆-alkyl, C₃-C₇-cycloalkyl, C₃-C₈-alkenyl, C₃-C₆-alkynyl or C₁-C₆-alkoxy-C₁-C₆-alkyl, or
R² is a group CH₂-CO-OR⁶ where
R⁶ is C₁-C₆-alkyl or C₁-C₆-alkoxy-C₁-C₆-alkyl, or
R² is a group -NHSO₂-(C₁-C₆-alkyl) and
R³ is chlorine or cyano,
b) 0.1-30% by weight of an anionic surfactant,
c) 0.1-30% by weight of a non-ionic surfactant,
d) 0.01-5% by weight of a thixotroping additive,
e) 0-50% by weight of other herbicidal active ingredients,
f) 0-20% by weight of other formulation auxiliaries, and
g) 1-90% of water,
with the proviso that the sum of components a) to g) is 100% by weight.

2. A storage-stable aqueous formulation as claimed in claim 1 comprising, as component a), at least one of the active ingredients I.1. to I.5.:
I.1.: R¹=H, R³=Cl, R²= -CH=C(Cl)-COOC₂H₅
I.2.: R¹=F, R³=Cl, R²= OCH₂-COOC₅H₁₁
I.3.: R¹=F, R³=Cl, R²= O-cyclopentyl
I.4.: R¹=F, R³=Cl, R²= OCH(CH₃)-C≡CH
I.5.: N-(7-fluoro-3,4-dihydro-3-oxo-4-prop-2-ynyl-2H-1,4-benzoxazin-6-yl)cyclohex-1-ene-1,2-dicarboximide.

## Revendications

1. Formulations aqueuses stables au stockage contenant
a) 0,1% - 60% en poids d'un tétrahydrophtalimide de formule I 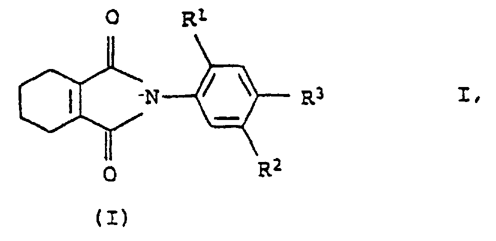 dans lesquelles les substituants ont les significations suivantes:
R¹ hydrogène, fluor ou chlore;
R² un groupe A-CO-B, dans lequel
A désigne CH=C(Cl) ou CH=C(Br) et
B représente un groupe alkyle en C₁-C₆ ou un groupe OR⁴ ou SR⁴, tandis que
R⁴ désigne l'hydrogène, un alkyle en C₁-C₄, un (alcoxy en C₁-C₆)carbonyl-alkyle(C₁-C₆) ou un alkyl(C₁-C₆)oximino-alkyle(C₁-C₆)
R² représente un groupe OR⁵, SR⁵, COOR⁵ ou OCH₂COOR⁵, tandis que
R⁵ désigne l'hydrogène, un alkyle en C₁-C₆, cycloalkyle en C₃-C₇, un alcényle en C₃-C₈, un alcynyle en C₃-C₆ ou un alcoxy(C₁-C₆)alkyle(C₁-C₆), ou
R² représente un groupe CH₂-CO-OR⁶, tandis que
R⁶ représente un groupe alkyle en C₁-C₆ ou un groupe alcoxy(C₁-C₆)-alkyle(C₁-C₆), ou
R² représente un groupement -NHSO₂-(alkyle en C₁-C₆) et
R³ désigne un groupe chloro ou cyano;
b) 0,1-30% en poids d'un agent de surface anionique,
c) 0,1-30% en poids d'un agent de surface non-ionique,
d) 0,01-5% en poids d'un additif conférant la thixotropie,
e) 0-50% en poids d'autres additifs herbicides,
f) 0-20% en poids d'un autre agent de formulation et
g) 1-90% d'eau,
avec pour condition que la somme des composants a) à g) vaut 100% en poids.

2. Formulation aqueuse stable au stockage selon la revendication 1, contenant comme composant a) au moins l'une de substances I.1 à I.5:
I.1: R¹ = H, R³ = Cl, R² = -CH=C(Cl)-COOC₂H₅
I.2: R¹ = F, R³ = Cl, R² = OCH₂-COOC₅H₁₁
I.3: R¹ = F, R³ = Cl, R² = O-cyclopentyle
I.4: R¹ = F, R³ = Cl, R² = OCH(CH₃)-C=CH
I.5: N-(7-fluoro-3,4-dihydro-3-oxo-4-prop-2-ynyl-2H-1,4-benzoxazine-6-yl)-cyclohex-1-ène-1,2-dicarboximide.
